(19) Europäisches Patentamt
European Patent Office
Office européen des brevets

(11) **EP 4 641 288 A1**

(12) **EUROPEAN PATENT APPLICATION**

(43) Date of publication:
**29.10.2025 Bulletin 2025/44**

(21) Application number: **25171090.1**

(22) Date of filing: **16.04.2025**

(51) International Patent Classification (IPC):
**G02B 27/01** $^{(2006.01)}$

(52) Cooperative Patent Classification (CPC):
**G02B 27/01; G02B 2027/011**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.04.2024 CN 202410516374**

(71) Applicant: **Airbus (Beijing) Engineering Centre Company Limited**
**Beijing 101312 (CN)**

(72) Inventor: **HUANG, Jinming**
**Beijing, 101312 (CN)**

(74) Representative: **Abel & Imray LLP**
**Westpoint Building**
**James Street West**
**Bath BA1 2DA (GB)**

(54) **IMAGE PROCESSING METHOD, IMAGE DISPLAY APPARATUS, COMPUTER PROGRAM PRODUCT, AND AIRCRAFT**

(57) Disclosed are an image processing method, an image display apparatus, a computer program product and an aircraft. The image processing method includes: generating a two-dimensional output image based on input information; guiding a light beam corresponding to the output image to a display unit; capturing a three-dimensional image displayed on the display unit; obtaining a photometric error and a geometric error between the captured three-dimensional image and the output image; constructing a loss function for the photometric error and the geometric error; solving the loss function through an algorithm for solving a point pair motion from three-dimension to two-dimension to obtain a translation matrix and a rotation matrix; and correcting the output image based on the translation matrix and the rotation matrix to display the corrected output image on the display unit.

Figure 2

## Description

This application claims priority to Chinese Patent Application No. 202410516374.2, titled "IMAGE PROCESSING METHOD, IMAGE DISPLAY APPARATUS, COMPUTER PROGRAM PRODUCT, AND AIRCRAFT", filed on April 26, 2024 with the China National Intellectual Property Administration, which is incorporated herein by reference in its entirety.

## FIELD

The present disclosure relates to the field of image processing, and in particular to improving imaging quality of image display apparatuses.

## BACKGROUND

In recent years, head-up displays (HUD) develop rapidly and are widely used. The head-up display, also known as a head-up display system, is a technology of projecting important information such as vehicle information, steering instructions, lane departure warnings, navigation, traffic conditions, and phone calls directly into a range of line of sight of a driver. With the head-up display, information is superposed on a field of view of reality of the driver, such that the driver can obtain required information without lowering or turning his head. Therefore, driving safety is improved, and distraction caused by looking down at a dashboard is avoided.

Conventional optical paths of a HUD generally adopt two-stage specular reflection technology, which causes two disadvantages. One of the disadvantages is a large volume of the HUD due to a large second-stage aspherical reflector for a wider FOV (field of view). The other disadvantage is high cost for manufacturing and assembly due to strict requirement on tolerance of concave lens, for forming an undistorted image.

## SUMMARY

Hereinafter provided is a brief summary of the present disclosure, which is intended to provide a basic understanding of aspects of the present disclosure. It should be understood that this summary is not an exhaustive overview of the present disclosure. The summary is not intended to identify key or critical portions of the present disclosure or to delineate the scope of the present disclosure. Its objective is merely to present some concepts in a simplified form, which serves as a preamble of a more detailed description to be discussed later.

According to an aspect of the present disclosure, an image processing method is provided, including: generating a two-dimensional output image based on input information; guiding a light beam corresponding to the output image to a display unit; capturing a three-dimensional image displayed on the display unit; calculating an error between the captured three-dimensional image and the output image; and correcting the output image based on the error to display the corrected output image on the display unit.

According to a preferred embodiment, the calculating of the error further includes: obtaining a photometric error and a geometric error between the captured three-dimensional image and the output image.

According to a preferred embodiment, the calculating of the error further includes: constructing a loss function for the photometric error and the geometric error, and solving the loss function through an algorithm for solving a point pair motion of three-dimension to two-dimension.

According to a preferred embodiment, the algorithm for solving the point pair motion of three-dimension to two-dimension is a perspective-n-point (PNP) algorithm.

According to a preferred embodiment, the image processing method further includes: correcting the output image based on a translation matrix and a rotation matrix obtained through solving the loss function by the perspective-n-point (PNP) algorithm.

According to a preferred embodiment, the photometric error is obtained by calculating a mean square error between pixels obtained by projecting the captured three-dimensional image onto a two-dimensional plane and pixels of the output image.

According to a preferred embodiment, the geometric error is obtained by performing triangulation on the captured three-dimensional image and the output image.

According to a preferred embodiment, a light beam corresponding to the output image is guided to the display unit via a waveguide.

According to a preferred embodiment, the waveguide is provided with at least one of an edge absorber for removing a ghost generated when the output image is projected onto the display unit, and a corner protector for removing a distortion generated when the output image is projected onto the display unit.

According to a preferred embodiment, the image processing method further includes stitching images used for multiple waveguides together with smooth edges by using a stitching algorithm.

According to a preferred embodiment, the three-dimensional image displayed on the display unit is captured by using a sensor arranged within an eyebox area of a viewer.

According to another aspect of the present disclosure, an image display apparatus is provided, including: an image generation unit configured to generate a two-dimensional output image based on input information; a display unit configured to display the output image; an optical path transmission unit configured to guide a light beam corresponding to the output image to the display unit; a three-dimensional sensor configured to capture an image displayed on the display unit; and an error calculation unit configured to calculate an error between the a three-dimensional image captured by the three-dimensional sensor and the output image; where the image generation unit is further configured to correct the output image based on the error to display the corrected output image on the display unit.

According to a preferred embodiment, the three-dimensional sensor is arranged within an eyebox area of a viewer.

According to a preferred embodiment, the error calculation unit is further configured to obtain a photometric error and a geometric error between the captured three-dimensional image and the output image.

According to a preferred embodiment, the error calculation unit is further configured to construct a loss function for the photometric error and the geometric error, and solve the loss function through an algorithm for solving a point pair motion of three-dimension to two-dimension.

According to a preferred embodiment, the algorithm for solving the point pair motion of three-dimension to two-dimension is a perspective-n-point (PNP) algorithm.

According to a preferred embodiment, the image generation unit is further configured to correct the output image based on a translation matrix and a rotation matrix obtained through solving the loss function by the PNP algorithm.

According to a preferred embodiment, the photometric error is obtained by calculating a mean square error between pixels obtained by projecting the captured three-dimensional image onto a two-dimensional plane and pixels of the output image.

According to a preferred embodiment, the geometric error is obtained by performing triangulation on the captured three-dimensional image and the output image.

According to a preferred embodiment, the optical path transmission unit is a waveguide.

According to a preferred embodiment, the waveguide is provided with at least one of an edge absorber for removing a ghost generated when the output image is projected onto the display unit, and a corner protector for removing a distortion generated when the output image is projected onto the display unit.

According to a preferred embodiment, the image display apparatus is a holographic waveguide head-up display apparatus.

According to a preferred embodiment, the holographic waveguide head-up display apparatus includes multiple waveguides, and the image generation unit is further configured to stitch images used for the waveguides together with smooth edges by using a stitching algorithm.

According to a preferred embodiment, in a case where the image display apparatus is applied to a vehicle, the display unit is a front windshield of the vehicle.

According to a preferred embodiment, the input information includes text information and image information.

According to other aspects of the present disclosure, corresponding computer program codes and a computer program product are further provided.

According to yet another aspect of the present disclosure, an aircraft including the image display apparatus is further provided.

According to a further aspect of the present disclosure, a computer-readable storage medium having a program stored thereon is provided, the program, when executed by a processor, causing the computer to perform the image processing method as described above.

Through the image display apparatus and the image processing method of the present disclosure, imaging quality of a HUD can be improved.

These and other advantages of the present disclosure become more apparent through preferred embodiments of the present disclosure described in detail below in conjunction with accompany drawings.

## BRIEF DESCRIPTION OF THE DRAWINGS

For a further illustration of the above and other advantages and features of the present disclosure, embodiments of the present disclosure are described in detail hereinafter in conjunction with accompanying drawings. The drawings, together with the detailed description below, are incorporated into and form a part of the specification. Elements having the same function and structure are denoted by same reference signs. It should be noted that the drawings illustrate merely typical examples of the present disclosure and should not be construed as a limitation to the scope of the present disclosure. In the drawings:

Figure 1 schematically shows an overall view of a holographic waveguide HUD according to a conventional technology.

Figure 2 is a flowchart of an image processing method 200 for improving imaging quality of a holographic waveguide HUD according to an embodiment of the present disclosure.

Figure 3 illustrates a flowchart of a method of obtaining a photometric error and a geometric error according to an embodiment of the present disclosure.

Figure 4 schematically shows an arrangement of a sensor 6 and a HUD in a cockpit of an aircraft according to an embodiment of the present disclosure.

Figure 5 schematically shows a comparison of a virtual image generated with an edge absorber versus without the edge absorber.

Figure 6 schematically shows a comparison of a virtual image generated with a corner protector versus without the corner protector.

Figure 7 shows an example of an image stitching algorithm.

8 is a block diagram of an image display apparatus 800 according to an embodiment of the present disclosure.

Figure 9 is a block diagram of an exemplary structure of a universal personal computer in which the method and/or apparatus according to the embodiments of the present disclosure can be implemented.

## DETAILED DESCRIPTION

Exemplary embodiments of the present disclosure are described below in conjunction with the drawings. For the sake of clarity and conciseness, not all features of an actual embodiment are described in the specification. However, it is to be appreciated that numerous implementation-specific decisions shall be made in development of any actual implementations so as to achieve specific objectives of a developer, for example, to comply with system- and business-related constraints, which may vary from one implementation to another. Furthermore, it should be understood that the development work, although may be complicated and timeconsuming, is only a routine task for those skilled in the art benefiting from the present disclosure.

Here, it should be further noted that in order to avoid obscuring the present disclosure by unnecessary details, only apparatus structures and/or processing steps closely related to the solutions according to the present disclosure are illustrated in the drawings, and other details less related to the present disclosure are omitted.

As mentioned above, the conventional HUD has the disadvantages of large volume and high cost. Moreover, the conventional HUD faces a sunlight backflow issue. Hence, it is necessary to place an imaging plane away from a focal plane of an optical system, resulting in a small collimation distance. In addition, the volume of the HUD increases significantly with increasing of the FOV of the conventional HUD.

In order to solve the above problems, an HUD based on an optical waveguide has been developed. The optical waveguide based on thin plate optics have advantages of small volume, low cost, great collimation distance (due to absence of the sunlight backflow issue), and that the FOV can be increased by simply increasing an area of a thin plate, without causing volume increase of the HUD.

Generally, there may be two types of optical waveguides, i.e., a geometric waveguide and a diffractive waveguide. The geometric waveguide outputs an image through an array reflector stack. The geometric optical waveguide is based on traditional geometric optical design concepts and does not involve any micro-nano-scale structure. As a result, an image can have a high-level color and contrast. A disadvantage is that the manufacturing process is complicated and each step of the process is required to achieve a high-yield rate. This makes an overall-yield rate of all process steps a challenge.

Diffraction optical waveguides mainly comprise a surface relief grating waveguide manufactured using photolithography technology, and a volumetric holographic grating waveguides (VHG) or holographic optical element (HOE) manufactured based on holographic interference technology. The surface relief grating waveguide has a higher design requirement than traditional optics, since a structure of the diffraction grating reaches to micro-nano-scale, which requires use of physical optics simulation tools; and a ray tracing part after light having entered the waveguide needs to be combined with traditional geometric optics simulation tools. Such technology has a disadvantage of a high manufacturing cost. The volumetric holographic grating waveguide uses a volumetric holographic grating element instead of a relief grating. A volume of the holographic optical waveguide may be one-fifth to one-tenth of a volume of a traditional HUD, thereby reducing significantly space occupied by the HUD in a cockpit of a vehicle such as an automobile, an aircraft etc.. Moreover, a manufacturing cost of a HUD based on a holographic waveguide is reduced significantly.

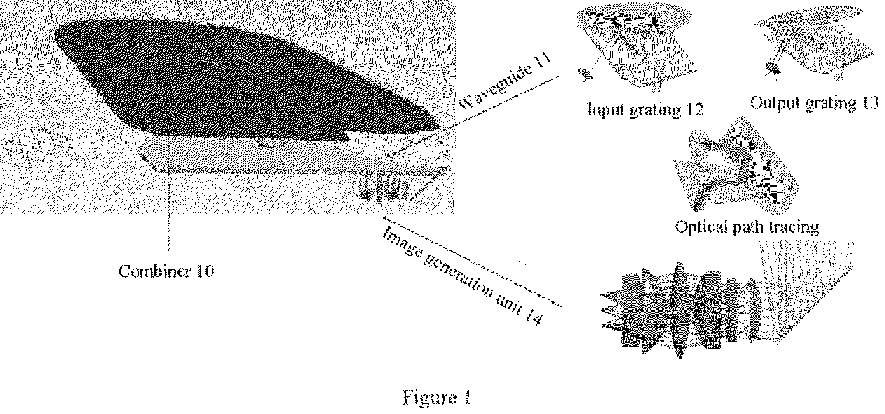

Figure 1 schematically shows an overall view of a holographic waveguide HUD (such as an AR HUD) according to a conventional technology.

As the name suggests, the holographic waveguide is composed of an optical waveguide and a volumetric holographic grating. The optical waveguide may be realized through various glass plates, and the volumetric holographic grating refers to a diffraction grating manufactured through holographic exposure interferometry. As shown in Figure 1, the holographic waveguide HUD includes a combiner 10, a waveguide 11 and an image generation unit 14. The waveguide 11 further includes an input grating 12 and an output grating 13. The principle of the optical waveguide consists in, after imaging of the image generation unit 14, guiding a light beam to pass through the input grating 12, enter the waveguide and propagate therein through total reflection, and projecting the light beam onto the combiner 10 through the output grating 13. Finally, the light beam projected onto the combiner 10 is ultimately reflected into the eyes of a driver.

The input grating 12 and the output grating 13 are, for example, volumetric holographic grating elements.

The combiner 10 is typically positioned between the human eyes and a front windshield of an automobile or aircraft, for example. Due to a short distance from the human eyes, a long-time viewing may cause dizziness, thereby reducing driving safety. Furthermore, the combiner 10 has a limited FOV. In order to solve this problem, it is possible to utilize the front windshield of the automobile or aircraft as a display screen. However, since inner and outer parallel surfaces of the windshield both produce reflected rays, the same incident ray produces two reflected rays. The two reflected rays, when received by human eyes, will produce a ghost image in which two figures appear.

A conventional solution for eliminating a ghost image on the front windshield is to adopt a wedge-shaped PVB laminated glass. By adjusting an angle of the wedge-shaped film and a thickness of the windshield, the reflected rays from the inner surface and outer surface of the windshield can be brought closer to each other, to eliminate the ghost image.

For example, a P-pol combiner film windshield improves image quality by reducing a relative ghost luminance (RGL). This method works well within an HUD virtual image distance and a small range of a driver position, but has a poor effect in a case where the driver position is higher or lower than an optimal viewing position. For example, a difference in heights of drivers may result in a difference of optimal viewing positions for the drivers.

A method that combines a transparent nanofilm with a P-polarizer based on the Brewster's angle may be adopted. However, this method affects imaging brightness and is difficult to meet a windshield design requirement due to a strict incident angle.

A parallel vector technology has been developed, in which a ghost-free projection on a windshield in a range from 2 meters to optical infinity is implemented through optical and algorithmic techniques, without a wedge-shaped PVB film. However, this method lacks generality as it is applicable to only a free-form reflection system based on off-axis three mirrors, and the volume of the HUD increases with increase of the FOV.

In order to solve the above prior art problems, the present disclosure proposes an image processing method and an image display apparatus, with which imaging quality is improved. A high-quality virtual image may be measured, for example, from the following aspects: brightness, chromaticity, uniformity, modulation transfer function (MTF), ghosting, distortion, warping, eyebox (eye movement space) limitations, and the like.

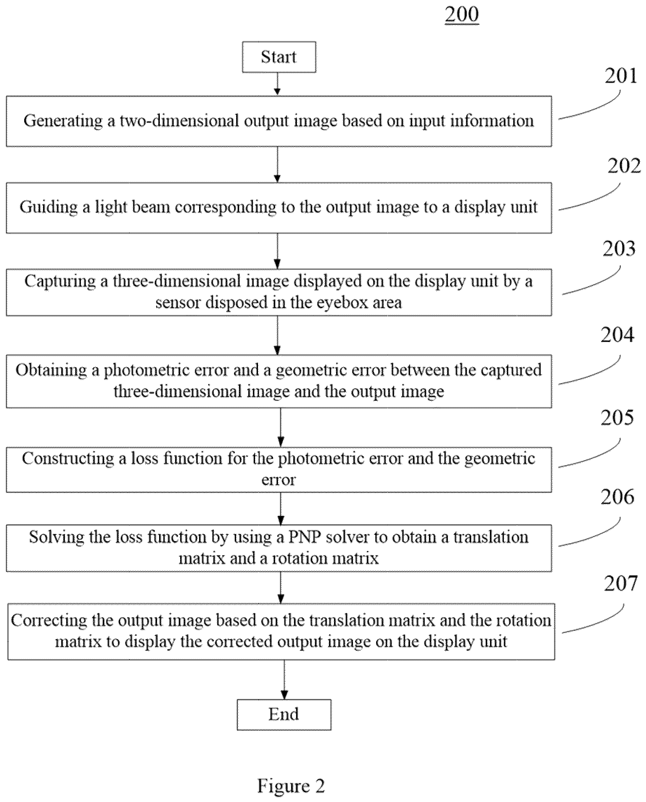

An image processing method 200 for improving imaging quality according to an embodiment of the present disclosure is described below with reference to Figure 2 to Figure 4.

First, in step 201, a two-dimensional output image is generated based on input information. It should be understood that the input information may be inputted externally and may include text information and image information. In an implementation, taking an application scenario of an aircraft as an example, a two-dimensional output image to be projected onto a front windshield of the aircraft may be generated based on information such as runway, speed, wind speed, ground condition etc. from avionics, to provide a pilot with required information.

Next, in step 202, a light beam corresponding to the output image is guided to a display unit. In an implementation, a light beam corresponding to the output image is, for example, guided through a waveguide and projected onto a display unit such as a windshield.

Then, in step 203, a three-dimensional image displayed on the display unit is captured by using a sensor arranged within an eyebox area. In an implementation, an image displayed on a display unit such as a windshield is captured by a sensor arranged within an eyebox area of a pilot. It should be noted that the image captured by the sensor is three-dimensional. For example, a RGB-D camera may be utilized to capture an image on the windshield to obtain a three-dimensional image including depth information.

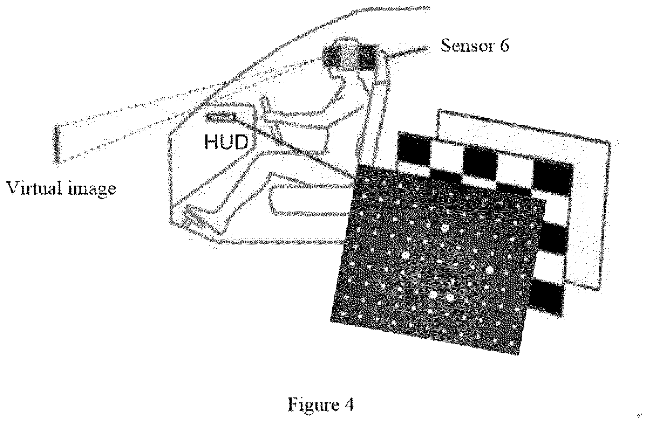

Figure 4 shows an example of arrangement of a sensor and a HUD in a cockpit of an aircraft. As shown in Figure 4, a sensor 6 is arranged within an eyebox area of a pilot, and a virtual image captured by the sensor corresponds to an image seen by the pilot when looks at the front horizontally. A HUD is disposed near a console in front of the pilot.

It should be noted that the sensor 6 may be removed after image correction having been completed in a case where only factory settings are required. However, the present disclosure is not limited thereto, and the sensor 6 may be retained for real-time correction.

Next, in step 204, a photometric error and a geometric error between the output image and the captured three-dimensional image are obtained.

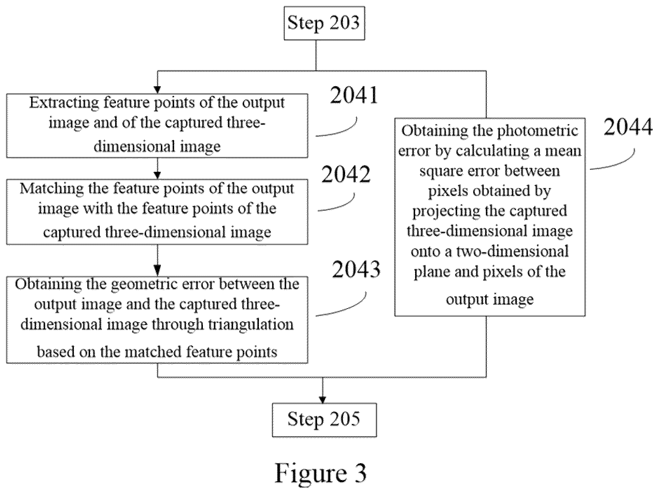

A method for obtaining the photometric error and the geometric error is described below in conjunction with an embodiment as shown in Figure 3.

In an implementation, in step 2041, feature points of the output image and of the captured three-dimensional image are extracted.

Next, in step 2042, the feature points of the output image are matched with the feature points of the captured three-dimensional image.

Next, in step 2043, the geometric error between the output image and the captured three-dimensional image is obtained through triangulation, based on the matched feature points.

As known, the triangulation is a method for determining a distance of a pixel based on an angle formed by observing the pixel at two locations. A basic principle of the triangulation consists in, based on properties of a triangle, the length of other sides of a triangle can be calculated by measuring two angles and the length of one side of the triangle. In practice, a position of a target point can be calculated by selecting a baseline and then measuring angles of both ends of the baseline to the target point.

To avoid obscuring the present disclosure, specific steps of obtaining the geometric error between the output image and the captured three-dimensional image through the triangulation is not further described.

It should be understood that although the geometric error between the output image and the captured three-dimensional image is obtained based on the triangulation in the embodiment of the present disclosure, the present disclosure is not limited thereto, and any other suitable algorithm may be utilized for calculating the geometric error.

Next, in step 2044, the photometric error is obtained by calculating a mean square error between pixels obtained by projecting the captured three-dimensional image onto a two-dimensional plane and pixels of the output image.

It should be understood that although the photometric error between pixels obtained by projecting the captured three-dimensional image onto the two-dimensional plane and the pixels of the two-dimensional output image is obtained based on the mean square error in the embodiment of the present disclosure, the present disclosure is not limited thereto, and any other suitable algorithm may be utilized for obtaining the photometric error.

It should also be understood that correction to the geometric error can improve a distortion of an image, and correction to the photometric error can eliminate a ghost in an image.

Referring back to Figure 2, in step 205, a loss function is constructed based on the photometric error and the geometric error. For example, based on the embodiment as shown in Figure 3, a loss function may be constructed as the following equation (1):

$$F(pt_i, c_i) = \sum_{i=1}^{m}\left(\left(P(pt_i) - c_i(\Lambda, T, \lambda, \theta)\right)^2 + \Delta(d(pt_i))\right) \qquad (1)$$

wherein:

m represents the number of corresponding pixels between the output image and the captured three-dimensional image;

$P(pt_i)$ represents a projection of pixels of the captured three-dimensional image on a two-dimensional plane;

$c_i(\Lambda, T, \lambda, \theta)$ represents corresponding pixels on the two-dimensional output image, and positions of the pixels are related to waveguide parameters $\Lambda$, $T$, $\lambda$, $\theta$, where A represents a grating period, T represents a grating thickness, $\lambda$ represents a wavelength and $\theta$ represents an incident angle of a light beam; and

$\Delta(d(pt_i)$ represents calculating the geometric error of feature points of the captured three-dimensional image based on the triangulation, where d represents projecting all three-dimensional feature points onto the two-dimensional image plane to apply an additional two-dimensional deformation operation.

Next, in step 206, the loss function is solved by using a PNP parser, to obtain a translation matrix and a rotation matrix. In an implementation, the PNP (perspective-n-point) parser is used to iteratively solve the loss function as equation (1). The translation matrix and the rotation matrix for correcting the output image can be obtained when the loss function is minimized.

The PNP is a known method for solving a point pair motion of three-dimension to two-dimension. In this method, a pose of a camera is estimated under a condition where coordinates (relative world coordinate system) of n three-dimensional points and pixel coordinates of these points are known, that is, a rotation matrix and a translation matrix from the world coordinate system to the camera coordinate system are solved. Solving methods of a PnP problem comprise direct linear transformation, P3P, bundle adjustment, and the like.

In a case of an RGB-D camera, matched pixel coordinates and depth information corresponding to the matched pixels can be obtained. In the case where a set of three-dimensional points obtained by an RBG-D matches two-dimensional points, pose estimation for a camera may be performed using the PNP algorithm.

In order to avoid obscuring the present disclosure, specific steps of solving the loss function $F(pt_i, c_i)$ by using the PNP parser is not described in detail here.

It should be understood that although the PNP parser is utilized for solving the loss function according to the embodiment of the present, the disclosure is not limited thereto and any other suitable algorithm for solving a point pair motion of three-dimension to two-dimension may be utilized for solving the loss function.

Finally, in step 207, the output image is corrected based on the translation matrix and the rotation matrix, and the corrected output image is displayed on the display unit. In an implementation, the two-dimensional output image generated by the image generation unit of the HUD is corrected based on the rotation matrix and the translation matrix outputted by the PNP parser, and the corrected two-dimensional output image is projected to a display unit such as a windshield through guiding by waveguide.

As known, image translation refers to shifting all pixels based on a unified position. Image rotation refers to rotating all pixel positions around a coordinate origin or a designated anchor point. Based on the translation matrix and the rotation matrix obtained by performing iteration on the loss function through the PNP parser, all pixels of the initial output image generated by the image generation unit are translated and rotated. In a virtual image obtained by projecting the output image after having been translated and rotated onto the windshield through guiding by a waveguide, a distortion is minimized and a ghost is eliminated.

With the image processing method 200 according to the embodiment of the present disclosure, a high-quality virtual image is generated, viewing experience for a pilot is improved, and operational safety is improved.

The image processing method 200 for improving imaging quality according to the present disclosure is particularly capable of enhancing movement guidance for airport ground vehicles and enhancing situational awareness of ground operation safety, and particularly improving operating experience for a pilot during a taxiing phase on the ground. However, it should be understood that the present disclosure is not limited to the application scenario of airports, but may also be applied to movement guidance in scenarios of other vehicles such as automobile, train etc..

According to a preferred embodiment of the present disclosure, in order to further improve the imaging quality of the holographic waveguide HUD, the following settings may be considered.

For example, a tilted surface relief grating may be adopted to enhance a diffraction effect of an input grating. A folding grating and an output grating may adopt holographic diffraction gratings. The combination of the tilted surface relief grating and the holographic diffraction grating may increase brightness of a virtual image to, for example, 6800 nits.

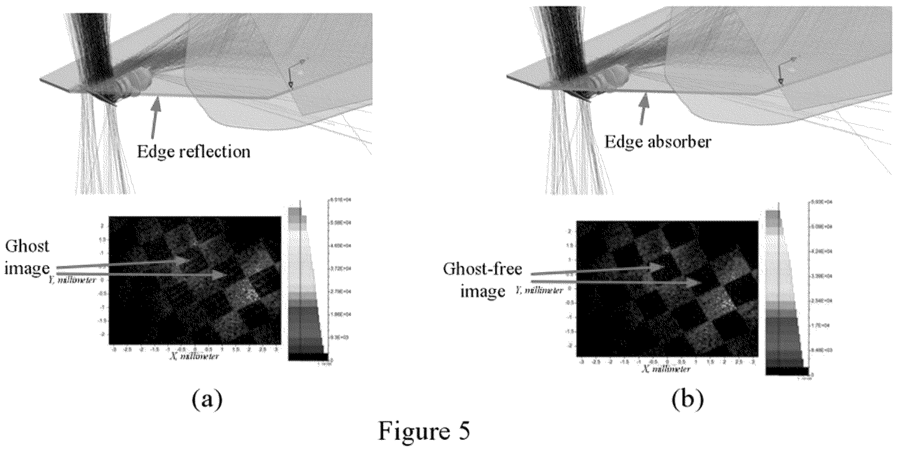

For example, an edge absorber may be disposed on the waveguide to remove a ghost due to edge reflection. In view (a) of Figure 5, an upper image schematically shows edge reflection, and a lower image shows ghosts in an image due to edge reflection. In view (b) of Figure 5, an upper image shows that an edge absorber is disposed in a waveguide, and a lower image shows that ghosts in an image are eliminated with the edge absorber disposed.

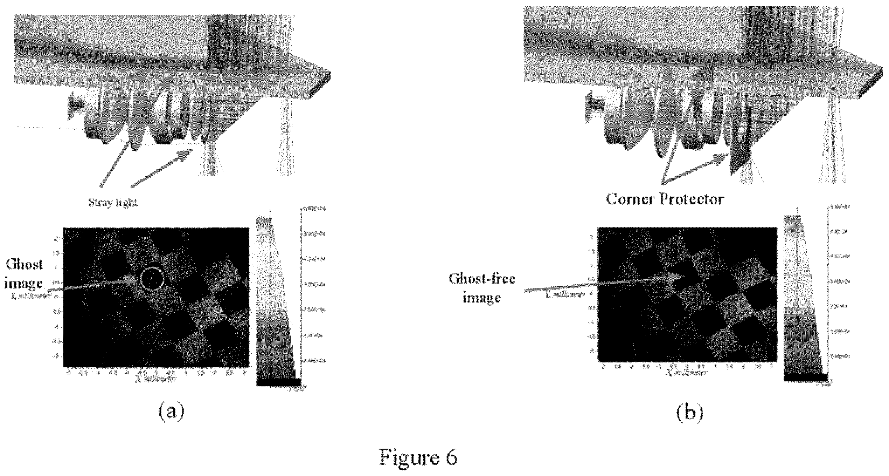

For example, a corner protector may be disposed on the waveguide to remove a ghost image due to stray light on the image generation unit. In view (a) of Figure 6, an upper image schematically shows stray light on an image generation unit, and a lower image shows ghosts in an image due to the stray light. In view (b) of Figure 6, an upper image shows that a corner protector is disposed in a waveguide, and a lower image shows that ghosts in an image are eliminated with the corner protector disposed.

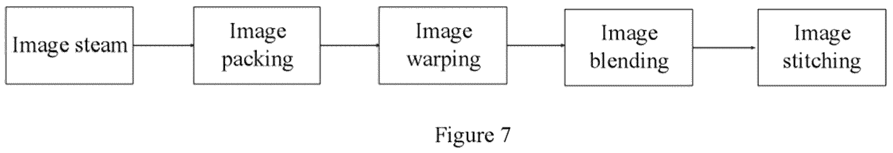

In addition, a stitching algorithm may be performed by the image generation unit to stitch holographic images of multiple waveguides together and smooth edges of the stitched image. The stitched image is then coupled into the waveguide. Thereby, the FOV can be increased and the user experience is further improved. Figure 7 shows an example of a known image stitching algorithm. As shown in Figure 7, the stitching algorithm includes packaging, warping, blending and stitching of images in an image stream.

It should be understood that the present disclosure is not limited to the example of the image stitching algorithm shown in Figure 7, and may be applied with any image stitching algorithm.

The methods discussed above may be implemented entirely by a computer-executable program, or may be implemented partially or completely by using hardware and/or firmware. In a case where the method is implemented with hardware and/or firmware, or the computer-executable program is loaded into a hardware device capable of executing the program, the image display apparatus to be described below is implemented. Hereinafter, an overview of the apparatus is given without repeating some of details discussed above. It should be noted that although the apparatus can perform the above-described method, the method does not necessarily adopt components of the apparatus as described or be performed by those components.

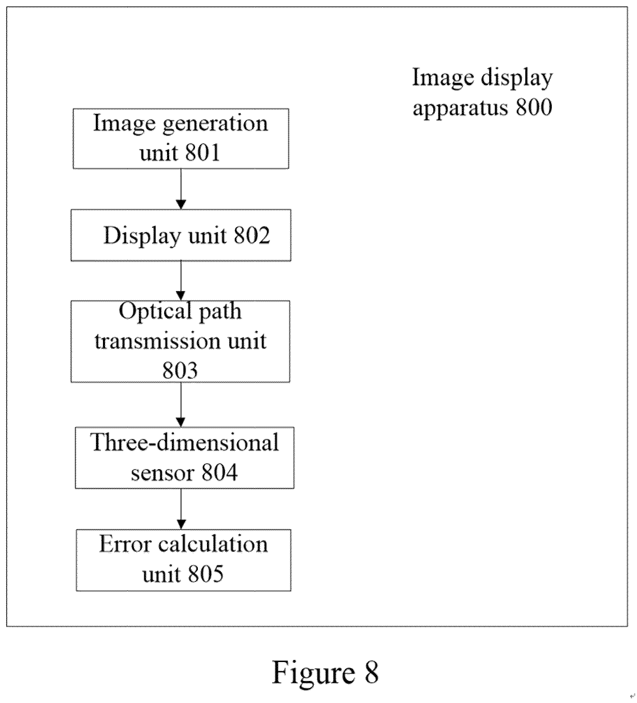

Figure 8 shows an image display apparatus 800. The image display apparatus 800 includes an image generation unit 801, a display unit 802, an optical path transmission unit 803, a three-dimensional sensor 804, and an error calculation unit 805. The image generation unit 801 is configured to generate a two-dimensional output image based on input information. The display unit 802 is configured to display the output image. The optical path transmission unit 803 is configured to guide a light beam corresponding to the output image to the display unit. The three-dimensional sensor 804 is configured to capture an image displayed on the display unit. The error calculation unit 805 is configured to calculate an error between a three-dimensional image captured by the three-dimensional sensor and the output image. The image generation unit 801 is further configured to correct the output image based on the error to display the corrected output image on the display unit 802.

According to a preferred embodiment, the three-dimensional sensor 804 is arranged within an eyebox area of a viewer.

According to a preferred embodiment, the error calculation unit 805 is further configured to: obtain a photometric error and a geometric error between the captured three-dimensional image and the output image, construct a loss function based on the photometric error and the geometric error, and solve the loss function through an algorithm for solving a point pair motion of three-dimension to two-dimension. The photometric error is obtained by calculating a mean square error between pixels obtained by projecting the captured three-dimensional image onto a two-dimensional plane and pixels of the output image. The geometric error is obtained by performing triangulation on the captured three-dimensional image and the output image.

According to a preferred embodiment, the algorithm for solving the point pair motion of three-dimension to two-dimension is a PNP algorithm, and the image generation unit 801 is further configured to correct the output image based on a translation matrix and a rotation matrix obtained by solving the loss function through the PNP algorithm.

According to a preferred embodiment, the optical path transmission unit 803 is a waveguide, and the waveguide is provided with at least one of an edge absorber for removing a ghost generated when the output image is projected onto the display unit 802, and a corner protector for removing a distortion generated when the output image is projected onto the display unit 802.

According to a preferred embodiment, the image display apparatus 800 is a holographic waveguide HUD, the HUD includes multiple waveguides, and the image generation unit 801 is further configured to stitch images used for the waveguides together with smooth edges by using a stitching algorithm.

According to a preferred embodiment, the display unit 802 is a front windshield of a vehicle.

According to a preferred embodiment, the three-dimensional sensor 804 may be removed from the image display apparatus 800 after image correction having been completed once.

The image display apparatus 800 shown in Figure 8 corresponds to the image processing method 200 shown in Figure 2 and Figure 3. Therefore, relevant details of units or devices in the image display apparatus 800 have been given in detail in the description of the image processing method 200 in Figure 2 and Figure 3, and are not repeated here.

The image display apparatus 800 according to the embodiment of the present disclosure has a reduced volume, a reduced cost, and generates a high-quality virtual image, that is, a distortion of a virtual image projected onto a windshield is minimized and a ghost thereof is eliminated. Hence, viewing experience of a pilot is improved and operation safety is improved.

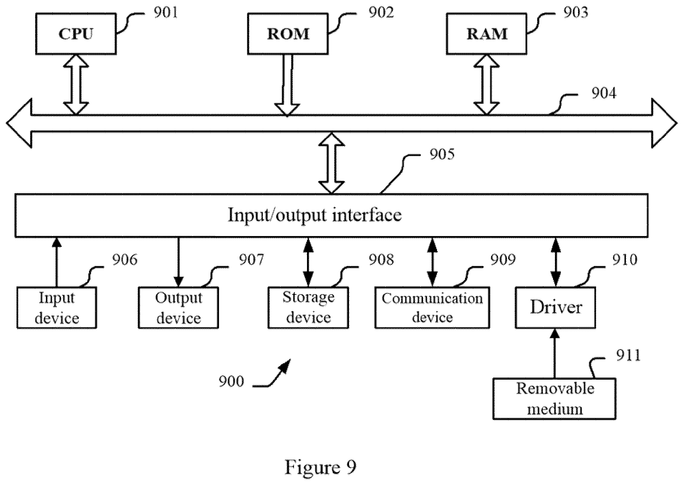

Component modules and units in the apparatus may be configured through software, firmware, hardware or a combination thereof. Specific means or methods that can be utilized for the configuration are well known to those skilled in the art, and are not repeated here. In a case of implementing in software or firmware, the program constituting the software is installed to a computer with a dedicated hardware structure (such as a general-purpose computer 900 as shown in Figure 9) from a storage medium or network. The computer, when installed with various programs, performs various functions.

Figure 9 is a block diagram of an exemplary structure of a universal personal computer in which the method and/or apparatus according to the embodiments of the present disclosure can be implemented. As shown in Figure 9, a central processing unit (CPU) 901 executes various processes according to a program stored in a read-only memory (ROM) 902 or a program loaded from a storage device 908 to a random-access memory (RAM) 903. In the RAM 903, data required for the CPU 901 to perform various processes or the like is stored as necessary. The CPU 901, the ROM 902 and the RAM 903 are connected to each other via a bus 904. An input/output interface 905 is connected to the bus 904.

The following components are connected to the input/output interface 905: an input device 906 (including a keyboard, a mouse, and the like), an output device 907 (including a display, such as a cathode ray tube (CRT) and a liquid crystal display (LCD), a loudspeaker, and the like), a storage device 908 (including a hard disk and the like), and a communication device 909 (including a network interface card such as a LAN card, a modem, and the like). The communication device 909 performs communication processes via a network, such as the Internet. A driver 910 may be connected to the input/output interface 905 as needed. A removable medium 911, such as a magnetic disk, an optical disk, a magnetic optical disk, and a semiconductor memory, is mounted to the driver 910 as required, so that a computer program read therefrom is mounted to the storage device 908 as required.

In a case that the above processes are implemented by software, the program consisting of the software is mounted from a network, such as the Internet, or from a storage medium, such as the removable medium 911.

Those skilled in the art should understood that, the storage medium is not limited to the removable medium 911, as shown in Figure 9, which stores a program and is distributed separately from the apparatus so as to provide the program for a user. Examples of the removable medium 911 includes a magnetic disk (including a soft disk (registered trademark)), an optical disk (including a compact disk read-only memory (CD-ROM) and a Digital Versatile Disk (DVD)), a magneto-optical disk (including a mini disk (MD) (registered trademark)), and a semiconductor memory. Alternatively, the storage medium may be the ROM 902, the hard disk contained in the storage device 908, or the like. The storage medium stores program and is distributed to the user along with an apparatus in which the storage medium is incorporated.

Corresponding computer program codes, and a computer program product storing machine-readable instruction codes are further provided in the present disclosure. The instruction codes, when read and executed by a machine, can implement the image processing method according to the embodiments of the present disclosure.

Accordingly, a storage medium configured for carrying the program product storing the machine-readable instruction codes is further included in the present disclosure. The storage medium includes, but is not limited to, a floppy disk, an optical disk, a magneto-optical disk, a storage card, a memory stick, and the like.

A computing apparatus including the storage medium is further included in the present disclosure. For example, an image display apparatus includes a processor and a storage medium storing a program code. The program code, when executed by the processor, implements the image processing method according to any of the embodiments of the present disclosure.

From the above description, the embodiments of the present disclosure provide the following technical solutions, which are not limited thereto.

Solution 1. An image processing method, comprising:

generating a two-dimensional output image based on input information;

guiding a light beam corresponding to the output image to a display unit;

capturing a three-dimensional image displayed on the display unit;

calculating an error between the captured three-dimensional image and the output image; and

correcting the output image based on the error to display the corrected output image on the display unit.

Solution 2. The image processing method according to solution 1, wherein the calculating of the error further comprises: obtaining a photometric error and a geometric error between the captured three-dimensional image and the output image.

Solution 3. The image processing method according to solution 2, wherein the calculating of the error further comprises: constructing a loss function for the photometric error and the geometric error, and solving the loss function through an algorithm for solving a point pair motion of three-dimension to two-dimension.

Solution 4. The image processing method according to solution 3, wherein the algorithm for solving the point pair motion of three-dimension to two-dimension is a perspective-n-point (PNP) algorithm.

Solution 5. The image processing method according to solution 3 or 4, further comprising: correcting the output image based on a translation matrix and a rotation matrix obtained through solving the loss function by the perspective-n-point (PNP) algorithm.

Solution 6. The image processing method according to any one of solutions 1 to 5, wherein the photometric error is obtained by calculating a mean square error between pixels obtained by projecting the captured three-dimensional image onto a two-dimensional plane and pixels of the output image.

Solution 7. The image processing method according to any one of solutions 1 to 6, wherein the geometric error is obtained by performing triangulation on the captured three-dimensional image and the output image.

Solution 8. The image processing method according to any one of solutions 1 to 7, wherein a light beam corresponding to the output image is guided to the display unit via a waveguide.

Solution 9. The image processing method according to solution 8, wherein the waveguide is provided with at least one of an edge absorber for removing a ghost generated when the output image is projected onto the display unit, and a corner protector for removing a distortion generated when the output image is projected onto the display unit.

Solution 10. The image processing method according to solution 8 or 9, further comprising stitching images used for multiple waveguides together with smooth edges by using a stitching algorithm.

Solution 11. The image processing method according to any one of solutions 1 to 10, wherein the three-dimensional image displayed on the display unit is captured by using a sensor arranged within an eyebox area of a viewer.

Solution 12. The image processing method according to any one of solutions 1 to 11, wherein the input information comprises text information and image information.

Solution 13. An image display apparatus, comprising:

an image generation unit configured to generate a two-dimensional output image based on input information;

a display unit configured to display the output image;

an optical path transmission unit configured to guide a light beam corresponding to the output image to the display unit;

a three-dimensional sensor configured to capture an image displayed on the display unit; and

an error calculation unit configured to calculate an error between a three-dimensional image captured by the three-dimensional sensor and the output image,

wherein the image generation unit is further configured to correct the output image based on the error to display the corrected output image on the display unit.

Solution 14. The image display apparatus according to solution 13, wherein the three-dimensional sensor is arranged within an eyebox area of a viewer.

Solution 15. The image display apparatus according to solution 14, wherein the error calculation unit is further configured to obtain a photometric error and a geometric error between the captured three-dimensional image and the output image.

Solution 16. The image display apparatus according to solution 15, wherein the error calculation unit is further configured to construct a loss function for the photometric error and the geometric error, and solve the loss function through an algorithm for solving a point pair motion of three-dimension to two-dimension.

Solution 17. The image display apparatus according to solution 16, wherein the algorithm for solving the point pair motion of three-dimension to two-dimension is a perspective-n-point (PNP) algorithm.

Solution 18. The image display apparatus according to solution 17, wherein the image generation unit is further configured to correct the output image based on a translation matrix and a rotation matrix obtained through solving the loss function by the perspective-n-point (PNP) algorithm.

Solution 19. The image display apparatus according to any one of solutions 15 to 18, wherein the photometric error is obtained by calculating a mean square error between pixels obtained by projecting the captured three-dimensional image onto a two-dimensional plane and pixels of the output image.

Solution 20. The image display apparatus according to any one of solutions 15 to 19, wherein the geometric error is obtained by performing triangulation on the captured three-dimensional image and the output image.

Solution 21. The image display apparatus according to any one of solutions 13 to 20, wherein the optical path transmission unit is a waveguide.

Solution 22. The image display apparatus according to solution 21, wherein the waveguide is provided with at least one of an edge absorber for removing a ghost generated when the output image is projected onto the display unit, and a corner protector for removing a distortion generated when the output image is projected onto the display unit.

Solution 23. The image display apparatus according to any one of solutions 13 to 22, wherein the image display apparatus is a holographic waveguide head-up display apparatus.

Solution 24. The image display apparatus according to solution 23, wherein the holographic waveguide head-up display apparatus comprises a plurality of waveguides, and wherein the image generation unit is further configured to stitch images used for the waveguides together with smooth edges by using a stitching algorithm.

Solution 25. The image display apparatus according to any one of solutions 13 to 24, wherein in a case where the image display apparatus is applied to a vehicle, the display unit is a front windshield of the vehicle.

Solution 26. The image display apparatus according to any one of solutions 13 to 25, wherein the input information comprises text information and image information.

Solution 27. A computer program product comprising a computer program, the computer program, when executed by a processor, implementing steps of the image processing method according to any one of solutions 1 to 12.

Solution 28. A computer-readable storage medium having a program stored thereon, the program, when executed by a processor, causing a computer to perform the image processing method according to any one of solutions 1 to 12.

Solution 29. An aircraft, comprising the image display apparatus according to any one of solutions 13 to 26.

Moreover, it should be noted that terms "include", "comprise" or any other variants are intended to be non-exclusive. Therefore, a process, method, article or device including a series of elements includes not only the elements but also other elements that are not enumerated, or further includes elements inherent to the process, method, article or device. In addition, unless expressively limited otherwise, the statement "comprising (including) a(n)..." does not exclude existence of other similar elements in the process, method, article or device.

Although the embodiments of the present disclosure are described in detail above with reference to the accompanying drawings, it should be understood that the embodiments are configured only for illustrating the present disclosure and do not constitute a limitation of the present disclosure. For those skilled in the art, various modifications and changes can be made to the embodiments without departing from the spirit and scope of the present disclosure. Therefore, the scope of the present disclosure is limited by only the appended claims and equivalents thereof.

**Claims**

1. An image processing method, comprising:

   generating a two-dimensional output image based on input information;
   guiding a light beam corresponding to the output image to a display unit;
   capturing a three-dimensional image displayed on the display unit;
   calculating an error between the captured three-dimensional image and the output image; and
   correcting the output image based on the error to display the corrected output image on the display unit.

2. The image processing method according to claim 1, wherein the calculating of the error further comprises:

   obtaining a photometric error and a geometric error between the captured three-dimensional image and the output image; and
   constructing a loss function for the photometric error and the geometric error, and solving the loss function through an algorithm for solving a point pair motion of three-dimension to two-dimension.

3. The image processing method according to claim 2, wherein the algorithm for solving the point pair motion of three-dimension to two-dimension is a perspective-n-point algorithm, the method further comprising:

   correcting the output image based on a translation matrix and a rotation matrix obtained through solving the loss function by the perspective-n-point algorithm.

4. The image processing method according to claim 2 or 3, wherein the photometric error is obtained by calculating a mean square error between pixels obtained by projecting the captured three-dimensional image onto a two-dimensional plane and pixels of the output image, and
   wherein the geometric error is obtained by performing triangulation on the captured three-dimensional image and the output image.

5. The image processing method according to any preceding claim, further comprising:
   stitching, by using a stitching algorithm, a plurality of generated output images together with smooth edges, and
   guiding a light beam corresponding to the stitched output image to the display unit.

6. The image processing method according to any preceding claim, wherein the input information comprises text information and image information.

7. An image display apparatus, comprising:

   an image generation unit configured to generate a two-dimensional output image based on input information;
   a display unit configured to display the output image;
   an optical path transmission unit configured to guide a light beam corresponding to the output image to the display unit;
   a three-dimensional sensor configured to capture an image displayed on the display unit; and
   an error calculation unit configured to calculate an error between a three-dimensional image captured by the three-dimensional sensor and the output image,
   wherein the image generation unit is further configured to correct the output image based on the error to display the corrected output image on the display unit.

8. The image display apparatus according to claim 7, wherein the three-dimensional sensor is arranged within an eyebox area of a viewer.

9. The image display apparatus according to claim 8, wherein the error calculation unit is further configured to:

   obtain a photometric error and a geometric error between the captured three-dimensional image and the output image; and
   construct a loss function for the photometric error and the geometric error, and solve the loss function through an algorithm for solving a point pair motion of three-dimension to two-dimension.

10. The image display apparatus according to claim 9, wherein the algorithm for solving a point pair motion of three-dimension to two-dimension is a perspective n-point algorithm, and wherein the image generation unit is further configured to correct the output image based on a translation matrix and a rotation matrix obtained through solving the loss function by the perspective-n-point algorithm.

11. The image display apparatus according to claim 9 or 10, wherein the photometric error is obtained by calculating a mean square error between pixels obtained by projecting the captured three-dimensional image onto a two-dimensional plane and pixels of the output image; and
    wherein the geometric error is obtained by performing triangulation on the captured three-dimensional image and the output image.

12. The image display apparatus according to any one of claims 7 to 11, wherein the optical path transmission unit is a waveguide provided with at least one of an edge absorber for removing a ghost generated when the output image is projected onto the display unit and a corner protector for removing a distortion generated when the output image is projected onto the display unit.

13. The image display apparatus according to any one of claims 7 to 12, wherein the optical path transmission unit comprises a plurality of waveguides, and wherein the image generation unit is further configured to stitch images used for the waveguides together with smooth edges by using a stitching algorithm.

14. A computer program product comprising a computer program, the computer program, when executed by a processor, implementing steps of the image processing method according to any one of claims 1 to 6.

15. An aircraft, comprising the image display apparatus according to any one of claims 7 to 13.

Waveguide 11

Input grating 12

Output grating 13

Optical path tracing

Combiner 10

Image generation unit 14

Figure 1

EP 4 641 288 A1

200

Start

Generating a two-dimensional output image based on input information — 201

Guiding a light beam corresponding to the output image to a display unit — 202

Capturing a three-dimensional image displayed on the display unit by a sensor disposed in the eyebox area — 203

Obtaining a photometric error and a geometric error between the captured three-dimensional image and the output image — 204

Constructing a loss function for the photometric error and the geometric error — 205

Solving the loss function by using a PNP solver to obtain a translation matrix and a rotation matrix — 206

Correcting the output image based on the translation matrix and the rotation matrix to display the corrected output image on the display unit — 207

End

Figure 2

Step 203

Extracting feature points of the output image and of the captured three-dimensional image 2041

Matching the feature points of the output image with the feature points of the captured three-dimensional image 2042

Obtaining the geometric error between the output image and the captured three-dimensional image through triangulation based on the matched feature points 2043

Obtaining the photometric error by calculating a mean square error between pixels obtained by projecting the captured three-dimensional image onto a two-dimensional plane and pixels of the output image 2044

Step 205

Figure 3

Figure 4

Figure 5

Stray light

Ghost image

(a)

Corner Protector

Ghost-free image

(b)

Figure 6

EP 4 641 288 A1

| Image steam | → | Image packing | → | Image warping | → | Image blending | → | Image stitching |

Figure 7

Image display
apparatus 800

Image generation
unit 801

Display unit 802

Optical path
transmission unit
803

Three-dimensional
sensor 804

Error calculation
unit 805

Figure 8

Figure 9

Europäisches
Patentamt
European
Patent Office
Office européen
des brevets

# EUROPEAN SEARCH REPORT

**Application Number**

EP 25 17 1090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 7 117592 B2 (PANASONIC IP MAN CORP) 15 August 2022 (2022-08-15) * paragraph [0043] * | 1-15 | INV. G02B27/01 |
| A | US 2017/054963 A1 (KASAZUMI KENICHI [JP] ET AL) 23 February 2017 (2017-02-23) * figures 1-2 * | 1-15 | |
| A | EP 3 554 068 B1 (KYOCERA CORP [JP]) 18 May 2022 (2022-05-18) * figure 4 * | 1-15 | |

**TECHNICAL FIELDS SEARCHED (IPC)**

G02B

The present search report has been drawn up for all claims

| Place of search | Date of completion of the search | Examiner |
|---|---|---|
| Munich | 22 September 2025 | Orignac, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 1090

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2025

| Patent document cited in search report | | Publication date | Patent family member(s) | | Publication date |
|---|---|---|---|---|---|
| JP 7117592 | B2 | 15-08-2022 | CN | 110308556 A | 08-10-2019 |
| | | | DE | 102019106736 A1 | 26-09-2019 |
| | | | JP | 6890306 B2 | 18-06-2021 |
| | | | JP | 7117592 B2 | 15-08-2022 |
| | | | JP | 2019164317 A | 26-09-2019 |
| | | | JP | 2021105726 A | 26-07-2021 |
| | | | US | 2019295508 A1 | 26-09-2019 |
| | | | US | 2021233499 A1 | 29-07-2021 |
| | | | US | 2022208148 A1 | 30-06-2022 |
| US 2017054963 | A1 | 23-02-2017 | EP | 3145184 A1 | 22-03-2017 |
| | | | JP | 2015215509 A | 03-12-2015 |
| | | | US | 2017054963 A1 | 23-02-2017 |
| | | | WO | 2015174052 A1 | 19-11-2015 |
| EP 3554068 | B1 | 18-05-2022 | CN | 110073659 A | 30-07-2019 |
| | | | EP | 3554068 A1 | 16-10-2019 |
| | | | KR | 20190084275 A | 16-07-2019 |
| | | | US | 2020074896 A1 | 05-03-2020 |
| | | | WO | 2018105534 A1 | 14-06-2018 |

For more details about this annex : see Official Journal of the European Patent Office, No. 12/82

**EP 4 641 288 A1**

**Patent documents cited in the description**

- CN 202410516374